# EUROPEAN PATENT APPLICATION

(11) **EP 0 578 120 A1**
(43) Date of publication of application: **12.01.1994**
(21) Application number: 93110430.1
(22) Date of filing: 30.06.1993
(51) Int. Cl.: C08G 61/08, B29C 37/00, B29C 67/24, C08J 5/00, C08L 65/00

(54) **Integrally molded composites of ring-opened norbornene-type polymers and method therefor**

(30) Priority: 30.06.1992 JP 196054/92
(71) Applicant: NIPPON ZEON CO., LTD., Tokyo (JP)
(72) Inventor: Matsui, Masayoshi, Yamato-shi, Kanagawa (JP); Suzuki, Shoji, Yokohama-shi, Kanagawa (JP)
(74) Representative: von Kreisler, Alek, Dipl.-Chem.

(57) **Abstract**

The invention is directed to an integrally molded laminated composite and process therefore. The laminated composite comprises a norbornene-type polymer matrix and an ethylene-vinyl chloride laminate layer. The laminate layer can be utilized as a tie layer for laminating a polyvinyl chloride surface layer onto the polynorbornene-type matrix. The process includes the steps of positioning the ethylene-vinyl chloride laminate layer in a mold, conveying a monomer solution comprising at least one norbornene-type monomer and a metathesis catalyst system into said mold, and polymerizing said monomer solution in contact with said ethylene-vinyl chloride laminate layer. The laminate layer tenaciously adheres to the polynorbornene-type matrix.

## Description

### BACKGROUND OF THE INVENTION

### 1. Technical Field

This invention relates to integrally molded composite articles or laminates and to a method for making same. More particularly, this invention relates to an integrally molded composite comprising a polynorbornene matrix and an ethylene-vinyl chloride layer. The method of the invention is achieved via an in-mold polymerization process in the presence of a metathesis catalyst system wherein a norbornene-type monomer is bulk polymerized in intimate contact with the ethylene-vinyl chloride layer.

### 2. State of the Art

Techniques for the manufacture of a molded product by in-mold polymerization such as reaction injection molding (RIM), liquid injection molding (LIM), resin transfer molding (RTM), or reaction casting (RC) are well-known. In the in-mold polymerization of norbornene-type monomers a reactive solution comprising a norbornene-type monomer and a metathesis catalytic system (a metathesis catalyst and cocatalyst) is injected into a mold and subjected to bulk ring-opening polymerization as described in U.S. Patent No. 4,426,502.

U.S. Patent No. 5,137,785 discloses a method for the manufacture of integrally molded laminate comprising a ring-opened norbornene-type polymer matrix layer and a polyolefinic surface layer. Such laminates are obtained by depositing polyolefinic substrate into a mold, conveying a reactive norbornene-type monomer solution into the mold, and then polymerizing the monomer (via metathesis polymerization) in contact with the polyolefinic substrate. A composite laminate with good interface adhesion is obtained.

Many advantages are realized from integrally molded composites formed in this manner: (1) the manufacture of sandwich-type composite panels having a polynorbornene core integrally molded between two sheet-like substrates is relatively easy; (2) improving the weather resistance of a norbornene-type polymeric article by forming a weather resistant surface layer thereon; (3) forming a surface layer on a polynorbornene matrix that is easily colorable or printable; (4) preventing odor emination due to residual unreacted monomers by forming a barrier layer on or around the polynorbornene matrix; and (5) providing a tie layer for laminating other laminate layer materials to a polynorbornene matrix.

The manufacture of composite molded articles have been proposed wherein a layer formed from an olefinic polymer or a hydrocarbon-type thermosetting elastomer is disposed on a matrix formed from a norbornene-type monomer by reaction injection molding; see U.S. Patent No. 5,137,785 (described above) and Japanese Laid-Open Publications 3-65319 and 3-69356. These composite molded products exhibit excellent characteristics, such as good interface adhesion, flexibility in coloring the surface layer, improved weather resistance, and resistance to the formation of sink marks.

One drawback, however, is that olefinic polymers such as polyethylene, which adhere well to ring-opened norbornene-type polymers do not adhere to other polymers. Accordingly, such composites can not be employed in applications where the composite must be laminated to other polymer layers. For example, polyvinyl chloride (PVC) will not fuse with the norbornene-type polymers. Consequently, PVC substrates cannot be integrally laminated to a polynorbornene matrix. Accordingly, there is a need for a method to integrally fuse or bond a polynorbornene matrix to a polyvinyl chloride substrate.

### SUMMARY OF THE INVENTION

The present inventors have discovered that an ethylene-vinyl chloride copolymer provides an excellent tie layer between a polynorbornene-type matrix and polyvinyl chloride.

Broadly stated, it is an object of the present invention to provide a laminated composite comprising a polynorbornene-type matrix with an ethylene-vinyl chloride surface layer integrally molded thereon.

It is another object of the present invention to provide a polymer composite having an integrally molded tie layer for adhering incompatible polymeric substrates to a ring-opened norbornene-type polymer matrix.

It is a further object of the present invention to provide a laminated polymer composite having an integrally molded tie layer without the need for adhesives.

It is another object of the present invention to provide a laminated composite comprising an integrally molded polynorbornene-type matrix, an ethylene-vinyl chloride tie layer, and a substrate layer which is bondable to the tie layer.

It is still another object of the present invention to provide a method for producing an integrally molded laminated composite comprising a ring-opened polynorbornene matrix and an ethylene-vinyl chloride tie or surface layer.

These and other objects of the present invention are accomplished by placing a tie layer of ethylene-vinyl chloride into a mold cavity and then conveying a reactive monomer solution comprising at least one norbornene-type monomer into the mold cavity in contact with at least a portion of a surface of said tie layer and bulk polymerizing the reactive solution in contact with the tie layer.

### DESCRIPTION OF THE INVENTION

In the past it has been difficult to integrally mold a material made of halogenated vinyl chloride polymers to a polymer matrix made by the bulk ring-opening polymerization of norbornene-type monomers (see European Published Patent Application No. 0 498 384). Surprisingly, it has been found that ethylene-vinyl chloride can be integrally molded to a polynorbornene-type matrix with superior ethylene-vinyl chloride to polynorbornene matrix interface adhesion. Without wishing to be bound by a specific theory of invention, it is believed that the strong interface bond is partly attributable to the melt adhesion that occurs at the surface of the ethylene-vinyl chloride/polynorbornene matrix interface. The melt adhesion occurs because of the high exotherm temperature (in excess of 150°C) generated as the norbornene-type monomers polymerize. Since the norbornene-type monomers are in contact with the ethylene-vinyl chloride tie layer during polymerization, an intimate interface bond is formed as the ethylene-vinyl chloride melt adheres to the polynorbornene matrix. Since ethylene-vinyl chloride copolymer adheres well to polyvinyl chloride substrates, it serves as an excellent tie layer between a polynorbornene-type matrix and the polyvinyl chloride substrate.

The integrally molded laminated composites of the present invention are prepared by the in-mold ring-opening bulk polymerization of at least one norbornene-type monomer in contact with the surface of an ethylene-vinyl chloride tie layer. A tie layer comprising at least a layer of ethylene-vinyl chloride is placed into a mold cavity whereupon a reactive monomer formulation comprising at least one norbornene-type monomer, a metathesis catalyst system, and optional ingredients is conveyed into the mold cavity so as to contact the surface of the ethylene-vinyl chloride layer, and polymerized under suitable polymerization conditions to be described below.

By norbornene-type or norbornene monomer is meant that the monomer employed in the method of this invention contains at least one norbornene group. By polynorbornene or norbornene-type polymers is meant that the polymer(s) employed is derived from a monomer(s) containing at least one norbornene group.

### (NORBORNENE-TYPE MONOMERS)

The matrix polymer utilized in the composites of this invention is a polymer obtained by the metathesis ring-opening polymerization of at least one norbornene-type monomer. The use of a tricyclic or higher cyclic norbornene-type monomer is preferred and gives the integrally molded composites of this invention high thermal deformation temperatures. Examples of suitable norbornene-type monomers include tricyclic monomers such as dicyclopentadiene, dihydrodicyclopentadiene, and the like; tetracyclic monomers such as tetracyclododence and the like; pentacyclic monomers such as tricyclopentadiene, and the like; heptacyclic monomers such as tetracyclopentadiene and the like. The alkyl (e.g., methyl, ethyl, propyl, butyl, and the like), alkylidene (e.g., ethylidene, and the like), aryl (e.g., phenyl, tolyl, naphthyl, and the like), and polar (e.g., ester, ether, nitrile, halogen, and the like) derivatives of the foregoing monomer types also are within the scope of this invention. The tricyclic, tetracyclic, and pentacyclic monomers are preferred because they are easily obtained, easily polymerised, and polymers thereof are heat resistant.

The foregoing monomers can be used alone to obtain a homopolymer product or two or more can be mixed to obtain a copolymer product. If a thermoset polymer is desired, a crosslinking monomer can be employed. Suitable crosslinking monomers are any polycyclic norbornene-type monomers containing two or more reactive double bonds. Examples include dicyclopentadiene, tricyclopentadiene, tetracyclododecene, and the like. If the norbornene-type monomer selected for use herein is a crosslinking monomer, the use of other crosslinking comonomers are not necessary.

The foregoing tricyclic or higher cyclic structure norbornene-type monomers can be copolymerized with bicyclic and/or monocyclic olefins monomers so long as the properties of the resulting polymer is not impaired. Examples of suitable bicyclic olefins include norbornadiene, 2-norbornene, 5-methyl-2-norbornene, 5-ethylidene-2-norbornene, 5-phenyl-2-norbornene, and the like. Suitable monocyclic olefins include cyclobutene, cyclopentene, cyclopentadiene, cyclooctene, cyclododecene, and the like.

### (CATALYST SYSTEM)

Any known metathesis catalyst and cocatalyst suitable for the ring-opening polymerization of norbornene-type monomers can be employed in the invention (see, for example, Japanese laid open application Nos. 58-127728, 58-129013, 59-51911, 60-79035, 60-18511, and 61-126115. Examples of suitable metathesis catalysts are the halides, oxyhalides, oxides, organic ammonium sales of tungsten, molybdenum, and tantalum, and the like. Examples of suitable cocatalysts are alkylaluminum halides, alkoxyalkylaluminum halides, aryloxyalkylaluminum halides, organotin compounds, and the like.

In addition to the catalyst and cocatalyst, an activating agent can be employed as disclosed in Japanese laid open application No. 60-79035. Halohydrocarbons such as chloroform, carbon tetrachloride, hexachloropentadiene, or metal halides such as silicon tetrachloride, germanium tetrachloride, and lead tetrachloride can be used.

The amount of metathesis catalyst employed ranges from about 0.01 to about 50 mmol, preferably about 0.1 to about 10 mmol per mole of norbornene-based monomer utilized. The amount of cocatalyst utilized ranges from about 0.1 to about 200 mole ratio based on the catalyst component, preferably in the 2 to 10 (mole ratio) range.

Preferably, the metathesis catalyst and cocatalyst are dissolved in the monomer. So long as product quality is not affected, the catalyst and cocatalyst can be suspended or dissolved in a solvent before introduction into the monomer.

### (ADDITIVES)

The polymer properties of the matrix can be modified by the addition of additives such as antioxidants, filler materials, strengthening materials, pigments, coloring agents, foaming agents, flame retardants, lubricants, elastomers, and/or dicyclopentadiene-type hydrogenated thermopolymer resins. The additives can be added to either one or both reactant solutions, or may be added to a third reactant solution.

Suitable antioxidants include phenolic, phosphorus, or amine-type compounds that are commonly used in plastics and rubbers.

Suitable fillers include inorganic materials such as milled glass, long glass fibers, glass mat, carbon black, talc, calcium carbonate, mica, and the like. Reinforcing fibers can be used in this invention to strengthen the outer layer.

Suitable elastomers include natural rubber, polybutadiene, polyisoprene, styrene-butadiene copolymer (SBR), styrene-butadiene-styrene block copolymer (SBS), styrene-isoprene-styrene block copolymer (SIS), ethylene-propylene-diene terpolymer (EPDM), ethylene-vinyl acetate copolymer (EVA), and their hydrogenated derivatives. The addition of the elastomer to the reactant solution(s) improves reactant solution viscosity as well as the impact properties of the molded composite product.

In this invention, the reinforcing material may be placed in the mold cavity and then the reaction solution is fed into the cavity and allowed to polymerize in the presence of the reinforcing material. Alternatively, the fiber fillers can be mixed in the reactant solutions before their introduction into the mold. Examples of suitable reinforcing materials are glass fibers, aramid fibers, carbon fibers, ultrahigh molecular weight polyethylene fibers, metal fibers, polypropylene fibers, aluminum coated glass fibers, cotton, acrylic resin fibers, boron fibers, silicon carbide fibers, alumina fibers, and the like. The reinforcing agents can be in the form of long fibers, chopped strand-type mat, fabric, chopped fiber, or many other forms suitable for providing reinforcement. The surface of these reinforcing materials can be treated with a silane coupling agent to improve their adhesion to the resin. There are no restrictions to the amount of reinforcing material utilized, but it is commonly not less than about 20 weight percent, preferably between about 30 to 70 weight percent.

### (ETHYLENE-VINYL CHLORIDE COPOLYMER)

The ethylene-vinyl chloride copolymer employed in the present invention is a copolymer of ethylene and vinyl chloride, wherein the content of ethylene is 10 weight percent or less. The copolymers employed have an average degree of polmerization of about 400 to about 1500.

Although a low-ethylene grade material, a medium-ethylene grade material, and a high-ethylene grade material are commercially available, the high-ethylene grade material having an ethylene content of about 6 to about 10 weight percent is preferable for melt adhesion. Ethylene-vinyl chloride copolymers having lower degrees of polymerization provide for greater adhesion to the norbornene-type polymer matrix, however, at the same time melt adhesion to polyvinyl chloride decreases. In cases where adhesion to a polyvinyl chloride molded product is carried out by use of an adhesive agent, the degree of polymerization of the ethylene-vinyl chloride copolymer is irrelevant.

Pigments, dyes, ultraviolet stabilizers, plasticizers, lubricants, and the like can be added to the ethylene-vinyl chloride copolymer to color the copolymer and/or to improve the weather resistance or melt processability, and the like. However, these additives must be substantially devoid of free acid and moisture which inhibit the polymerization of the norbornene-type monomer by interfering with the metathesis catalytic system. In addition olefinic-type polymers, hydrocarbon-type thermosetting elastomers, petroleum resins, and the like can be added in small amounts to the ethylene-vinyl chloride in order to improve adhesion to a substrate.

The ethylene-vinyl chloride copolymer can be molded into a film, a sheet, a board, or any other desired shape and thickness, by use of blow molding, extrusion molding, calendaring, inflation molding, casting, or the like. These substrates can be used as surface layers, tie layers or core elements in the polynorbornene-type matrix. Accordingly, the configuration of the ethylene-vinyl chloride copolymer is not necessarily limited to a sheet-like substrate.

The ethylene-vinyl chloride substrate of the desired configuration is placed within a mold cavity as is, or, for example, a substrate which has been molded from a film or sheet can be vacuum formed to the configuration of the mold.

A multi-layer laminated substrate comprising an ethylene-vinyl chloride copolymer and a layer of polyvinyl chloride may be used in place of the single ply ethylene-vinyl chloride tie layer or substrate. An integrated laminate sheet can be obtained by thermally fusing a ply of an ethylene-vinyl chloride copolymer to a ply of polyvinyl chloride. This laminated sheet can be molded into a desired configuration and then used as a substrate material in the same manner mentioned above with the proviso that the ethylene-vinyl chloride layer has to face inward away from the mold cavity wall when the multi-layered substrate is placed in the mold. This is important so that the reactive monomer formulation can polymerize in contact with the ethylene-vinyl chloride interface.

### (MOLDED COMPOSITE)

According to the method of this invention the ethylene-vinyl chloride substrate is affixed to a surface of a mold cavity wall. The substrate can be affixed to any location on the mold cavity surface. More than one substrate can be affixed to the mold cavity surface. For example in the case wherein the mold cavity has a rectangular configuration a sheet or plate-like tie layer or substrate element can be affixed to the top surface of the mold cavity, to the bottom surface of the mold cavity, to the side wall of the mold cavity, within the mold cavity, or combinations thereof. The tie layer or substrate can be coextensive with the entire mold cavity surface (e.g., top, bottom, or side) or can be coextensive with only a portion thereof, the effect of which is manifested in an entire surface or a portion of a surface of the polynorbornene matrix being laminated. As stated above, the only proviso is that where adhesion to the polynorbornene-type matrix is desired the ethylene-vinyl chloride must be in contact with the polymerizing monomer solution.

The substrate component can be affixed to the mold cavity surface by any adhesive that does not permanently bond to the mold cavity surface. The adhesive should be selected so that it readily releases from the mold cavity surface (after the polymerization reaction) with minimal force. The adhesive is applied to the surface of the substrate that will contact the mold cavity wall. Alternatively, double sided tape can be used to affix the substrate component to the mold cavity surface or wall.

Following the affixment of the substrate or tie layer component to the mold cavity surface(s), a reaction solution comprising a norbornene-type monomer and metathesis catalyst system is injected into the mold (in intimate contact with the surface of the ethylene-vinyl chloride) and allowed to polymerize by bulk ring-opening polymerization. Following the polymerization reaction (after allowing sufficient time for cooling), an integrally molded composite comprising a polynorbornene matrix and a substrate or tie layer comprising at least a ethylene-vinyl chloride layer is removed from the mold. The composite has excellent interface adhesion between the polynorbornene matrix substrate without the need for adhesives.

In an alternative embodiment of this invention, the ethylene-vinyl chloride can be used as a core component in the composite. In this embodiment the core component is placed in a mold cavity of a desired configuration such that a gap is formed between the core component and the surfaces of the mold cavity. In some composite configurations the core ends can extend up to and through the mold cavity side wall. When the mold cavity is filled with the monomer reaction, the core is completely or substantially surrounded by the reaction solution. Methods of placing core components in molds are disclosed in copending patent application No. 07/690,038 filed on April 23, 1991, the disclosure of which is hereby fully incorporated by reference. Substrate sheets also can be stacked within the mold cavity such that a gap is provided between layers. The substrate layers can be spaced apart by using spacer elements at each corner of the substrate. Integral spacer elements can be molded into the substrate so when stacked a space or gap is formed between adjacently stacked substrate layers. The gaps and spaces between the substrate layers provide a channel which will eventually be filled with reaction solution.

### (POLYMERIZATION)

In the method of the present invention, the bulk polymerization of norbornene-type monomers in the presence of the metathesis catalyst system is carried out in a mold. A small amount of inert solvent may be present in the formulation so long as the solvent does not adversely affect the polymerization reaction or polymer product produced therefrom.

A preferred bulk ring-opening polymerization method is to divide a norbornene-type monomer solution into two portions and to store them in separate containers. Into one container, the metathesis catalyst is added to form one reactant solution and into the other, the cocatalyst is added to form the other reactant solution. The activating agent, if desired, is preferably added to the cocatalyst reactant solution, but it also can be added to either container or to both containers. The two reactant solutions are then mixed and injected into a mold wherein the reactive solution is in intimate contact with at least one surface of the ethylene-vinyl chloride and/or core component. The bulk ring-opening polymerization reaction is then carried out in the mold cavity.

Molds made of resin, wood, steel, or aluminum can all be used safely. The mold cavity may be of any shape depending on the desired configuration of the composite product.

The two reactant solutions are mixed by using a conventional reaction injection mold (RIM) apparatus. In this case the two reactant solutions are stored in two separate vessels and serve as the source for the two reactant feed streams. The two streams are intimately mixed in the mixing head of the RIM apparatus (impingement mixing head) to form the reaction solution. The mixture is injected into a preheated metal mold and bulk polymerized to produce the integrally molded composite product.

Optionally, after mixing the two reactant solutions, the mixture can be conveyed (poured or injected) into a mold in several portions (batch feeding) as taught in U.S. Patent No. 4,426,502. Alternatively the reaction solution can be injected in a continuous mode. With this method, the apparatus is smaller in comparison to an impingement type mixing apparatus, allowing the process to be carried out at low operating pressures. When a large amount of glass fiber reinforcement is utilized within the mold, the injection of reaction solution may be carried out at a low injection speed to allow the solution to homogeneously infiltrate the glass fibers.

This invention is not limited to a two reactant stream process. A third reactant stream (or a plurality of streams) containing an additional reactant(s) or additive(s) can be employed in the present process.

The mold temperature employed is commonly greater than room temperature (e.g., above 30°C), preferably between about 40 to 200°C, and more preferably between about 50 to 130°C. The mold pressure is commonly between about 0.1 to 100 kg/cm².

The polymerization time can be determined as needed. However, the time from feeding the reactive solution into the mold cavity to the onset of the polymerization preferably should be less than 20 minutes, preferably within 5 minutes, and more preferably within 2 minutes.

The reactant solutions are stored under an inert gas atmosphere such as nitrogen, and also should be processed under such an inert atmosphere. However, the mold does not necessarily have to contain an inert gas.

A foaming agent can be placed in one or both of the reactant solutions. Suitable foaming agents include aliphatic hydrocarbons such as pentane, hexane, and the like, halohydrocarbons such as methylene chloride, trichlorofluoromethane, dichlorodifluoromethane, and the like; or inert gases such as nitrogen, argon, and the like.

Certain embodiments of the present invention will now be described with reference to the following examples which are not intended to serve as a limitation of the scope thereof. In the examples, all parts are parts by weight and all percentages are percentages by weight unless otherwise specified.

### EXAMPLE 1

Catalyst and cocatalyst reactant formulations were prepared as follows:
To 100 parts of a mixed monomer solution including dicyclopentadiene (DCPD) and tricyclopentadiene (TCP) in a ratio of 9:1 (by weight), 6.5 parts of styrene-isoprene-styrene (SIS) block copolymer (Quintac 3421 manufactured by Nippon Zeon Co.), and 1 part of polybutadiene (BR-1220 manufactured by Nippon Zeon Co.) were added and mixed. Equal aliquots of resultant monomer solution was placed in two vessels. Into one of the vessels, diethylaluminum chloride (DEAC) cocatalyst, n-propanol, and silicon tetrachloride were added to give concentrations of 40 mmoles, 42 mmoles, and 20 mmoles, respectively. Into the other vessel, tri(tridecyl)ammonium molybdate catalyst was added to give a concentration of 10 mmoles. Three parts of a phenol-type antioxidant (Ethanox 702 manufactured by Ethyl Corporation) per 100 parts of the monomer formulation was then added.

A sheet having a thickness of about 1 mm was formed by means of a calendar and press from an ethylene-vinyl chloride copolymer (VE-S manufactured by Tokuyama Sekisui Co., having an ethylene content of 8%, and the degree of polymerization of 470).

The ethylene-vinyl chloride sheet was cut into a square measuring approximately 200 mm on a side. The square was placed onto the bottom of a split mold having a mold cavity measuring 200 mm x 200 mm x 5 mm. The mold was then heated to 70°C. The catalyst and cocatalyst formulations were mixed in a ratio of 1:1 and injected into the mold cavity. The polymerization reaction was carried out for about 3 minutes, resulting in an integrally molded laminated composite having a thickness of about 5 mm. The molding operation was conducted under a nitrogen atmosphere.

### EXAMPLE 2

To the integrally molded laminated composite samples prepared in Example 1, commercially available polyvinyl chloride sheets were adhesively bonded to the ethylene-vinyl chloride layer. A vinyl chloride adhesive (Eslon N65 manufactured by Sekisui Kagaku Kogyo Co.) was applied to a surface of the polyvinyl chloride sheet. After the adhesive cured for 1 hour the integrally molded laminated composite was placed in contact with the surface of the polyvinyl chloride sheet while applying a pressure of about 0.1 kg/cm² (contact area 12.5 mm x 25 mm). Tensile shear adhesion strength was measured according to JIS K-6850. A grip tab at the end of each test piece was held by a chuck, and the tensile shear adhesion strength was measured at a shear rate of 1 mm/minute. After 1 hour cure the average tensile shear strength (5 reps.) measured 30 kg/cm². After 1 day cure the average tensile shear strength (5 reps.) measured 80 kg/cm².

### EXAMPLE 3

A composite article with PVC substrate layer was formed in the same manner as mentioned in Example 2 except that the ethylene-vinyl chloride layer had a degree of polymerization of 700 (VE-T manufactured by Tokuyama Sekisui Co.). The tensile adhesion was measured in the same manner as mentioned in Example 2 were 30 kg/cm² (average) after 1 hour cure, and 82 kg/cm² (average) after 1 day cure.

### EXAMPLE 4

A composite panel was formed in the same manner as set forth in Example 2 except that the ethylene-vinyl chloride had a degree of polymerization of 1500 (VE-U manufactured by Tokuyama Sekisui Co.). The tensile adhesion strengths, which were measured in the same manner as Example 2 were 35 kg/cm² on average after 1 hour cure, and 78 kg/cm² after 1 day cure.

### EXAMPLE 5

The ethylene-vinyl chloride copolymer (VE-U manufactured by Tokuyama Sekisui Co.) was utilized to form a tube having an inner diameter of 25 mm, a wall thickness of 1.5 mm, and a length of 125 mm by extrusion molding. The tube was placed into a split mold having an upper half and a lower half. The mold had a mold cavity that was configured so that a void of 4 mm between the outer surface of the tube and the inner surface of the mold cavity was formed. The mold had two apertures to support both ends of the tube. The formulation used in Example 1 was injected through the inlet part of the mold, and the reaction was carried out as in Example 1 except for about 4 minutes. A composite cylinder having an outer polynorbornene-type layer and ethylene-vinyl chloride inner layer was obtained.

The composite tube had excellent interface adhesion between the inner layer and the outer substrate layer. It was impossible to separate the two layers.

### EXAMPLE 6

A two-layer laminate was formed by heat pressing a sheet of the ethylene-vinyl chloride copolymer (VE-T manufactured by Tokuyama Sekisui Co.) having a thickness of 1 mm, and a sheet of polyvinyl chloride (103EP manufactured by Nippon Zeon Co.) having a thickness of 1 mm.

A composite article was formed in the same manner as in Example 1 except that the above two-layered laminate sheet was used instead of the single ply ethylene-vinyl chloride copolymer sheet. The laminate sheet was placed in a mold so that the surface of the ethylene-vinyl chloride copolymer was facing the inside of the mold cavity and the polyvinyl chloride layer was in contact with the mold cavity wall. The monomer was polymerized in contact with the ethylene-vinyl chloride layer. The resultant composite exhibited good adhesion along the polynorbornene/ethylene-vinyl chloride interface. The tensile shear adhesion strength was as high as the composites that utilized the single ply ethylene-vinyl chloride copolymer layer.

### EXAMPLE 7

### (COMPARISON)

A composite was formed in the same manner as in Example 1 except that a sheet of polyvinyl chloride (103EP manufactured by Nippon Zeon Co.) having a thickness of 1 mm was used instead of the ethylene-vinyl chloride copolymer sheet. The resultant composite had inferior adhesion between the substrate and the sheet, and the composite was easily separated at the interface.

## Claims

1. An integrally molded composite article comprising a ring-opened norbornene-type polymer matrix and at least one substrate element, said norbornene-type polymer is derived from at least one norbornene-type monomer, and said substrate element comprises an ethylene-vinyl chloride copolymer, wherein said norbornene-type monomer is bulk polymerized in a mold in contact with a surface of said ethylene-vinyl chloride copolymer of said substrate element.

2. An integrally molded composite article comprising a ring-opened norbornene-type polymer matrix, and an ethylene-vinyl chloride copolymer tie layer which is integrally molded to said norbornene-type polymer matrix, and a polyvinyl chloride layer laminated to said tie layer, wherein said norbornene-type polymer is derived from at least one norbornene-type monomer, and said norbornene-type monomer is bulk polymerized in a mold in contact with said ethylene-vinyl chloride tie layer.

3. The article of claim 1 wherein a surface of said substrate element has a layer of polyvinyl chloride laminated thereto.

4. The article of claim 1, 2, or 3 wherein the ethylene-vinyl chloride copolymer has an ethylene content of about 10 or less weight percent and a degree of polymerization ranging from about 400 to about 1500.

5. The article of claim 4 wherein the ethylene-vinyl chloride copolymer has an ethylene content of from about 5 to about 10 weight percent.

6. The article of claim 1, 2, or 3 wherein the norbornene-type polymer matrix is derived from at least one norbornene-type monomer selected from the group consisting of dicyclopentadiene, dihydrocyclopentadiene, tetracyclododecene, tricyclopentadiene tetracyclopentadiene, including the alkyl, alkylidenyl, halogen, and polar substituents thereof.

7. The article of claim 6 wherein said monomer further comprises a cycloolefin monomer selected from the group consisting of 2-norbornene, 5-methyl-2-norbornene, 5-ethylidene-2-norbornene, 5-phenyl norbornene, cyclobutene, cyclopentene, cyclopentadiene, cyclooctene, cyclododecene, and mixtures thereof.

8. The article of claim 1, 2, or 3 wherein said norbornene-type polymer matrix further comprises a reinforcing filler.

9. The article of claim 8, wherein said filler is selected from the group consisting of glass fibers, carbon fibers, and glass fiber mat.

10. The article of claim 1, 2, or 3 wherein said ethylene-vinyl chloride copolymer further comprises an additive selected from the group consisting of polyolefins, hydrocarbon thermosetting elastomers, and petroleum resins.

11. The article of claim 1, 2, or 3 wherein said ethylene-vinyl chloride copolymer further comprises additives selected from the group consisting of pigment, dyes, ultraviolet stabilizers, plasticizers, and lubricants with the proviso that said additives are free of acid and moisture.

12. A method for producing an integrally molded composite article comprising a norbornene-type polymeric matrix and a substrate element, said method comprise the steps of providing a mold having a substrate element disposed therein, said substrate element comprising a copolymer of ethylene-vinyl chloride, feeding a bulk polymerizable liquid reaction solution comprising at least one norbornene-type monomer, a metathesis catalyst, and a cocatalyst in said mold wherein said liquid reaction solution is in contact with at least a portion of said ethylene-vinyl chloride copolymer; and polymerizing said reaction solution to obtain an integrally molded polymeric article.

13. The method of claim 12 wherein the ethylene-vinyl chloride copolymer has a ethylene content of about 10 or less weight percent and a degree of polymerization ranging from about 400 to about 1500.

14. The method of claim 13 wherein the ethylene-vinyl chloride copolymer has an ethylene content of from about 5 to about 10 weight percent.

15. The method of claim 12,13, or 14 wherein the norbornene-type polymer matrix is derived from at least one norbornene-type monomer selected from the group consisting of dicyclopentadiene, dihydrocyclopentadiene, tetracyclododecene, tricyclopentadiene tetracyclopentadiene, including the alkyl, alkylidenyl, halogen, and polar substituents thereof.

16. The method of claim 15 wherein said monomer further comprises a cycloolefin monomer selected from the group consisting of 2-norbornene, 5-methyl-2-norbornene, 5-ethylidene-2-norbornene, 5-phenyl norbornene, cyclobutene, cyclopentene, cyclopentadiene, cyclooctene, cyclododecene, and mixtures thereof.

17. The method of claim 12, 13, or 15 wherein said ethylene-vinyl chloride copolymer further comprises an additive selected from the group consisting of polyolefins, hydrocarbon thermosetting elastomers, and petroleum resins.

18. The method of claim 12, 13, of 15 wherein said ethylene-vinyl chloride copolymer further comprises additives selected from the group consisting of pigments, dyes, ultraviolet stabilizers, plasticizers, and lubricants with the proviso that said additives are free of acid and moisture.
